Europäisches Patentamt

European Patent Office

Office européen des brevets

(11) Veröffentlichungsnummer: **0 056 939**
**B1**

# (12) EUROPÄISCHE PATENTSCHRIFT

(45) Veröffentlichungstag der Patentschrift:
29.05.85

(21) Anmeldenummer: 82100120.3

(22) Anmeldetag: 11.01.82

(51) Int. Cl.⁴: **C 08 G 18/14,** C 08 G 18/48,
C 08 G 18/76, B 29 C 45/22,
B 60 N 1/00, A 47 C 27/14

(54) Formteil, insbesondere Polster für Fahrzeugsitze, aus Polyurethanschaumstoff mit Zonen unterschiedlicher Eindruckhärte und Verfahren zu seiner Herstellung.

(30) Priorität: 23.01.81 DE 3102140

(43) Veröffentlichungstag der Anmeldung:
04.08.82 Patentblatt 82/31

(45) Bekanntmachung des Hinweises auf die Patenterteilung:
29.05.85 Patentblatt 85/22

(84) Benannte Vertragsstaaten:
BE DE FR GB IT NL SE

(56) Entgegenhaltungen:
DE - A - 1 815 311
DE - A - 2 523 527

(73) Patentinhaber: BAYER AG, Konzernverwaltung RP
Patentabteilung, D-5090 Leverkusen 1 Bayerwerk (DE)

(72) Erfinder: Samaritter, Reinhard, Fichtestrasse 33,
D-5090 Leverkusen 1 (DE)
Erfinder: Schoberth, Winfried, Dr.,
Gustav-Freytag-Strasse 9, D-5090 Leverkusen 1 (DE)
Erfinder: Volland, Robert, Dr.,
Oskar-Schlemmer-Strasse 12, D-5090 Leverkusen 1 (DE)

Die Akte enthält technische Angaben, die nach dem Eingang der Anmeldung eingereicht wurden und die nicht in dieser Patentschrift enthalten sind.

# 0 056 939

## Beschreibung

Die vorliegende Erfindung betrifft ein Formteil, insbesondere Polster für Fahrzeugsitze, bestehend aus einem Polyurethanschaumstoffteil mit Zonen unterschiedlicher Härte und ein Verfahren zu seiner Herstellung.

Gemäß der DE-OS 2 052 907 sollte bereits ein Verfahren verbessert werden, mit welchem Polsterformteile mit lokal gezielt unterschiedlichen Härten in einem einzigen Formwerkzeug und einem einzigen Arbeitsgang durch Verwendung von Schaumstoffkompositionen unterschiedlicher Beschaffenheit herstellbar waren. Dabei trat ein unkontrollierbares Vermischen durch In- und/oder Übereinanderfließen der eingesetzten schäumfähigen Reaktionsgemische ein. Durch dabei entstehende Verhärtungen und Schlierenbildungen konnte die erwünschte, reproduzierbare Härteverteilung nicht erreicht werden.

Mit der Lehre der genannten DE-OS wurde nun versucht, die einzelnen Zonen im Hohlraum des Formwerkzeuges mit Hilfe von Textilgewebe oder dergleichen gegeneinander abzugrenzen, so daß beim Einfüllen der unterschiedlichen Reaktionsgemische in die einzelnen Zonen ein In- und/oder Übereinanderfließen verhindert wird.

Der Nachteil derartiger Polster ist darin zu sehen, daß der dabei erforderliche Aufwand an Material für die Einlagen und an Zeit zum Fixieren der Einlagen im Formhohlraum erheblich ist und die Formteile verteuert. Außerdem besteht die Gefahr, daß diese als Trennflächen wirkenden Einlagen trotz guter Haftfähigkeit des Schaumstoffes bei hohen Dauerbeanspruchungen, wie sie bei Automobil-, Flugzeug- oder Bootssitzen auftreten, Angriffsstellen darstellen, entlang denen der Schaumstoff reißen kann.

Es besteht die Aufgabe, ein Sitzpolster zu schaffen, das den erforderlichen Eigenschaften bezüglich Härte, d. h. bezüglich elastischer Verformbarkeit und Dauerfestigkeit bei hoher Beanspruchung unter Ausschluß von unerwünschten Verhärtungen gerecht wird und sich dabei trotzdem aus dem Reaktionsgemisch allein und schnell herstellen läßt.

Gelöst wird diese Aufgabe dadurch, daß dieses Polyurethanschaumstoffteil ein Reaktionsprodukt darstellt,

a)  aus einer Polyolkomponente mit mindestens 2 Hydroxylgruppen aufweisenden Polyestern vom Molekulargewicht 400 bis 10 000, in denen mindestens 10 Gew.-% der vorhandenen Hydroxylgruppen primäre Hydroxylgruppen darstellen,

b)  aus einer Polyisocyanatkomponente, enthaltend ein Gemisch aus Diphenylmethandiisocyanaten und oligomeren Polyphenylpolymethylenpolyisocyanaten, welches 60 bis 90 Gew.-%, vorzugsweise 65 bis 80 Gew.-%, 4,4'-Diphenylmethandiisocyanat und 3 bis 30 Gew.-%, vorzugsweise 10 bis 30 Gew.-%, 2,4'-Diphenylmethandiisocyanat aufweist,

c)  die in diesem Reaktionsprodukt zugehörige Reaktionsmischung für die einzelnen Zonen unterschiedliche, für die gewünschte Härte charakteristische Kennzahlen aufweist, und

d)  die Übergänge zwischen den einzelnen Zonen verhärtungsfrei sind.

Bei derartigen Polstern handelt es sich vornehmlich um Sitzpolster und Rückenlehnenpolster, aber auch um Armlehnen, Seitenlehnen und dergleichen, die über ihre Gesamtausdehnung unterschiedliche Eigenschaften haben sollen.

Dabei beziehen sich diese unterschiedlichen Eigenschaften sowohl auf die einzelnen Zonen als auch auf die durch den innigen Verbund an den jeweiligen Grenzflächenverlauf resultierenden Gesamteffekte.

Die Härte, d. h. die elastische Verformbarkeit von Schaumstoffen läßt sich z. Z. nach folgenden Prüfmethoden ermitteln:

Die Prüfung der Eindruckhärte erfolgt normalerweise nach DIN 53 576 bzw. ASTM 1564 an Schaumstoffproben mit Oberflächenhaut; die Prüfung der Stauchhärte nach DIN 53 577 an Schaumstoffproben ohne Oberflächenhaut. Die Hersteller bzw. Verbraucher, insbesondere die Automobilindustrie, bevorzugen die eine oder andere dieser Prüfmethoden. Da diese Prüfmethoden aber nur unvollkommene Schlüsse auf das Gesamtverhalten des Polsters zulassen, werden im Hinblick auf die Sicherheitsbestrebungen der Automobilindustrie künftig sicherlich Prüfungen des gesamten Polsters unter Praxisbedingungen entwickelt. Aus derartigen Versuchen wären dann entsprechende Vorschriften für die Beschaffenheit des Schaumstoffes der einzelnen Zonen des Sitzpolsters zu erarbeiten.

Die »Kennzahl« ist gemäß Kunststoff-Handbuch, Band VII, Polyurethane, herausgegeben vom Karl Hanser Verlag, München, 1966, Seite 441, wie folgt definiert:

$$\text{Kennzahl} = \frac{\text{Isocyanatmenge (praktisch)}}{\text{Isocyanatmenge (theoretisch)}} \times 100$$

Das erfindungsgemäß zu verwendende Gemisch aus Diphenylmethandiisocyanaten und oligomeren Polyphenyl-polymethylenpolyisocyanaten und seine Herstellung ist an sich bekannt.

Als erfindungsgemäß miteinzusetzende Ausgangskomponenten kommen aliphatische, cycloaliphatische und weitere aromatische und heterocyclische Polyisocyanate in Betracht, wie sie z. B. von W. Siefken in Justus Liebigs Annalen der Chemie 562, Seiten 75 bis 136, beschrieben werden, beispielsweise Ethylendiisocyanat, 1,4-Tetramethylendiisocyanat, 1,6-Hexamethylendiisocyanat, 1,12-Dodecandiisocyanat, Cyclobutan-1,3-diisocyanat, Cyclohexan-1,3- und -1,4-diisocyanat sowie beliebige Gemische dieser Isomeren, 1-Isocyanato-3,3,5-trimethyl-5-isocyanatomethyl-cyclohexan (DE-AS 1 202 785, US-Patentschrift 3 401 190), 2,4- und 2,6-Hexahydrotoluylendiisocyanat sowie beliebige Gemische dieser Isomeren, Hexahydro-1,3- und/oder -1,4-phenylendiisocyanat, Perhydro-2,4'- und/oder -4,4'-diphenylmethandiisocyanat, 1,3- und 1,4-Phenylendiisocyanat, 2,4- und 2,6-Toluylendiisocyanat sowie beliebige Gemische dieser Isomeren, Naphthylen-1,5-diisocyanat, Triphenylmethan-4,4', 4"-Triisocyanat, m- und p-Isocyanato-phenylsulfonyl-isocyanat gemäß der US-Patentschrift Patentschrift 3 454 606, perchlorierte Arylpolyisocyanate, wie sie z. B. in der deutschen Auslegeschrift 1 157 601 (US-Patentschrift 3 277 138) beschrieben werden, Carbodiimidgruppen aufweisende Polyisocyanate, wie sie in der deutschen Patentschrift 1 092 007 (US-Patentschrift 3 152 162) beschrieben werden, Diisocyanate, wie sie in der US-Patentschrift 3 492 330 beschrieben werden, Allophanatgruppen aufweisende Polyisocyanate, wie sie z. B. in der britischen Patentschrift 994 890, der belgischen Patentschrift 761 626 und der veröffentlichten holländischen Patentanmeldung 7 102 524 beschrieben werden, Isocyanuratgruppen aufweisende Polyisocyanate, wie sie z. B. in der US-Patentschrift 3 001 973, in den deutschen Patentschriften 1 022 789, 1 222 067 und 1 027 394 sowie in den deutschen Offenlegungsschriften 1 929 034 und 2 004 048 beschrieben werden, Urethangruppen aufweisende Polyisocyanate, wie sie z. B. in der belgischen Patentschrift 752 261 oder in der US-Patentschrift 3 394 164 beschrieben werden, acylierte Harnstoffgruppen aufweisende Polyisocyanate gemäß der deutschen Patentschrift 1 230 778, Biuretgruppen aufweisende Polyisocyanate, wie sie z. B. in der deutschen Patentschrift 1 101 394 (US-Patentschriften 3 124 605 und 3 201 372) sowie in der britischen Patentschrift 889 050 beschrieben werden, durch Telomerisationsreaktionen hergestellte Polyisocyanate, wie sie z. B. in der US-Patentschrift 3 654 106 beschrieben werden, Estergruppen aufweisende Polyisocyanate, wie sie z. B. in den britischen Patentschrift 965 474 und 1 072 956, in der US-Patentschrift 3 567 763 und in der deutschen Patentschrift 1 231 688 genannt werden, Umsetzungsprodukte der o. g. Isocyanate mit Acetalen gemäß der deutschen Patentschrift 1 072 385 und polymere Fettsäurereste enthaltende Polyisocyanate gemäß der US-Patentschrift 3 455 883.

Es ist auch möglich, die bei der technischen Isocyanatherstellung anfallenden, Isocyanatgruppen aufweisenden Destillationsrückstände, gegebenenfalls gelöst in einem oder mehreren der vorgenannten Polyisocyanate, mit einzusetzen. Ferner ist es möglich, beliebige Mischungen der vorgenannten Polyisocyanate mitzuverwenden.

Monofunktionelle Isocyanate, wie Propylenisocyanat, Cyclohexylisocyanat, Phenylisocyanat, Toluylenisocyanat, p-Chlorphenylisocyanat können ebenso mitverwendet werden.

Erfindungsgemäß einzusetzende Ausgangskomponenten sind ferner Polyether mit mindestens zwei Hydroxylgruppen von einem Molekulargewicht in der Regel von 400 bis 10 000, insbesondere 2 bis 8, vorzugsweise aber 2 bis 4, Hydroxylgruppen aufweisende Polyether, speziell solche vom Molekulargewicht 800 bis 10 000, vorzugsweise 1000 bis 6000, wobei in den Polyethern mindestens 10 Gew.-% der Hydroxylgruppen primäre Hydroxylgruppen darstellen.

Diese Polyether sind an sich bekannt und werden z. B. durch Polymerisation von Epoxiden wie Ethylenoxid und gegebenenfalls Propylenoxid, Butylenoxid, Tetrahydrofuran, Styroloxid oder Epichlorhydrin mit sich selbst, z. B. in Gegenwart von $BF_3$, oder durch Anlagerung dieser Epoxide, gegebenenfalls im Gemisch oder nacheinander, an Startkomponenten mit reaktionsfähigen Wasserstoffatomen wie Wasser, Alkohole, Ammoniak oder Amine, z. B. Ethylenglykol, Propylenglykol-(1,3) oder -(1,2), Trimethylolpropan, Glycerin, 4,4'-Dihydroxydiphenylpropan, Anilin, Ethanolamin oder Ethylendiamin hergestellt, wobei die (endständigen) primären Hydroxylgruppen vorzugsweise durch Ethylenoxid-Umsetzung entstehen. Auch Sucrosepolyether, wie sie z. B. in den deutschen Auslegeschriften 1 176 358 und 1 064 938 beschrieben werden, kommen erfindungsgemäß in Frage. Auch durch Vinylpolymerisate modifizierte Polyether, wie sie z. B. durch Polymerisation von Styrol und Acrylnitril in Gegenwart von Polyethern entstehen (US-Patentschriften 3 383 351, 3 304 273, 3 523 093, 3 110 695, deutsche Patentschrift 1 152 536), sind geeignet, ebenso OH-Gruppen aufweisende Polybutadiene.

Erfindungsgemäß gegebenenfalls neben den Polyethern in Mengen bis max. 50 Gew.-%, bezogen auf Polyether, mit einzusetzende Ausgangskomponenten sind ferner mindestens 2, in der Regel 2 bis 8, vorzugsweise aber 2 bis 4, Hydroxylgruppen aufweisende Polyester, von primären Hydroxylgruppen freie Polyether, Polythioether, Polyacetale, Polycarbonate und Polyesteramide, wie sie für die Herstellung von homogenen und von zellförmigen Polyurethanen an sich bekannt sind, von einem Molekulargewicht in der Regel von 400 bis 10 000, speziell solche vom Molekulargewicht 800 bis 10 000, vorzugsweise 1000 bis 6000.

Die in Frage kommenden Hydroxylgruppen aufweisenden Polyester sind z. B. Umsetzungsprodukte von mehrwertigen, vorzugsweise zweiwertigen und gegebenenfalls zusätzlich dreiwertigen Alkoholen mit mehrwertigen, vorzugsweise zweiwertigen, Carbonsäuren. Anstelle der freien Polycarbonsäuren können auch die entsprechenden Polycarbonsäureanhydride oder entsprechende Polycarbonsäureester von niedrigen Alkoholen oder deren Gemische zur Herstellung der Polyester verwendet werden. Die Polycarbonsäuren können aliphatischer, cycloaliphatischer, aromatischer und/oder heterocyclischer Natur sein und gegebenenfalls, z. B. durch Halogenatome, substituiert und/oder ungesättigt sein.

Als Beispiele hierfür seien genannt:

Bernsteinsäure, Adipinsäure, Korksäure, Azelainsäure, Sebacinsäure, Phthalsäure, Isophthalsäure, Trimellitsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäureanhydrid, Fumarsäure, dimere und trimere Fettsäuren wie Ölsäure, gegebenenfalls in Mischung mit monomeren Fettsäuren, Terephthalsäuredimethylester und Terephthalsäure-bis-glykolester.

Als mehrwertige Alkohole kommen z. B.

Ethylenglykol, Propylenglykol-(1,2) und -(1,3), Butylenglykol-(1,4) und -(2,3), Hexandiol-(1,6), Octandiol-(1,8), Neopentylglykol, Cyclohexandimethanol (1,4-Bis-hydroxymethylcyclohexan), 2-Methyl-1,3-propandiol, Glycerin, Trimethylolpropan, Hexantriol-(1,2,6), Butantriol-(1,2,4), Trimethylolethan, Pentaerythrit, Chinit, Mannit und Sorbit, Methylglykosid, ferner Diethylenglykol, Triethylenglykol, Tetraethylenglykol, Polyethylenglykole, Dipropylenglykol, Polypropylenglykole, Dibutylenglykol und Polybutylenglykole in Frage.

Die Polyester als Lactonen, z. B. $\alpha$-Caprolacton oder Hydroxycarbonsäuren, z. B. $\omega$-Hydroxycapronsäure, sind einsetzbar.

Auch die erfindungsgemäß gegebenenfalls mitzuverwendenden, mindestens 2, in der Regel 2 bis 8, vorzugsweise 2 bis 3, Hydroxylgruppen (jedoch keine primären Hydroxylgruppen) aufweisenden Polyether sind solche der an sich bekannten Art und werden z. B. durch Polymerisation von Epoxiden wie Ethylenoxid, Propylenoxid, Butylenoxid, Tetrahydrofuran, Styroloxid oder Epichlorhydrin mit sich selbst, z. B. in Gegenwart von $BF_3$, oder durch Anlagerung dieser Epoxide, gegebenenfalls im Gemisch oder nacheinander, an Startkomponenten mit reaktionsfähigen Wasserstoffatomen wie Wasser, Alkohole, Ammoniak oder Amine, z. B. Ethylenglykol, Propylenglykol-(1,3) oder -(1,2), Trimethylolpropan, 4,4'-Dihydroxy-diphenylpropan, Anilin, Ethanolamin oder Ethylendiamin hergestellt. Auch Sucrosepolyether, wie sie z. B. in den deutschen Auslegeschriften 1 176 358 und 1 064 938 beschrieben werden, kommen erfindungsgemäß in Frage. Alle diese Polyether enthalten keine primären OH-Gruppen.

Unter den Polythioethern seien insbesondere die Kondensationsprodukte von Thiodiglykol mit sich selbst und/oder mit anderen Glykolen, Dicarbonsäuren, Formaldehyd, Aminocarbonsäuren, oder Aminoalkoholen angeführt. Je nach den Co-Komponenten handelt es sich bei den Produkten um Polythiomischether, Polythioetherester oder Polythioetheresteramide.

Als Polyacetale kommen z. B. die aus Glykolen, wie Diethylenglykol, Triethylenglykol, 4,4'-Dioxethoxydiphenylmethylmethan, Hexandiol und Formaldehyd herstellbaren Verbindung in Frage. Auch durch Polymerisation cyclischer Acetale lassen sich erfindungsgemäß geeignete Polyacetale herstellen.

Als Hydroxylgruppen aufweisende Polycarbonate kommen solche der an sich bekannten Art in Betracht, die z. B. durch Umsetzung von Dillen wie Propandiol-(1,3), Butandiol-(1,4) und/oder Hexandiol-(1,6), Diethylenglykol, Triethylenglykol oder Tetraethylenglykol mit Diarylcarbonaten, z. B. Diphenylcarbonat, oder Phosgen hergestellt werden können.

Zu den Polyesteramiden und Polyamiden zählen z. B. die aus mehrwertigen gesättigten und ungesättigten Carbonsäuren bzw. deren Anhydriden und mehrwertigen gesättigten und ungesättigten Aminoalkoholen, Diaminen, Polyaminen und ihren Mischungen gewonnenen, vorwiegend linearen Kondensate.

Auch bereits Urethan- oder Harnstoffgruppen enthaltende Polyhydroxylverbindungen sowie gegebenenfalls modifizierte natürliche Polyole, wie Rizinusöl, Kohlenhydrate oder Stärke, sind verwendbar. Auch Anlagerungsprodukte von Alkylenoxiden an Phenol-Formaldehyd-Harze oder auch an Harnstoff-Formaldehyd-Harze sind erfindungsgemäß einsetzbar.

Vertreter dieser erfindungsgemäß zu verwendenden Verbindungen sind z. B. in High Polymers, Vol. XVI, »Polyurethanes, Chemistry and Technology«, verfaßt von Saunders-Frisch, Interscience Publishers, New York, London, Band I, 1962, Seiten 44—54 und Band II, 1964, Seiten 5—6 und 198—199, sowie im Kunststoff-Handbuch, Band VII, Vieweg-Höchtlen, Carl-Hanser-Verlag München, 1966, z. B. auf den Seiten 45—71, beschrieben.

Selbstverständlich können Mischungen der o. g. Verbindungen mit mindestens 2 gegenüber Isocyanaten reaktionsfähigen Wasserstoffatomen mit einem Molekulargewicht von 400 bis 10 000, z. B. Mischungen von Polyethern und Polyestern, mit eingesetzt werden.

Als erfindungsgemäß gegebenenfalls in Mengen von bis zu 50 Gew.-%, bezogen auf den Polyether, mit einzusetzende Ausgangskomponenten kommen auch Verbindungen mit mindestens 2 gegenüber Isocyanaten reaktionsfähigen Wasserstoffatomen von einem Molekulargewicht 32 bis 400 in Frage. Auch in diesem Fall versteht man hierunter Hydroxylgruppen und/oder Aminogruppen und/oder Thiolgruppen und/oder Carboxylgruppen aufweisende Verbindungen, vorzugsweise Hydroxylgruppen und/oder Aminogruppen aufweisende Verbindungen, die als Kettenverlängerungsmittel oder Vernetzungsmittel dienen. Diese Verbindungen weisen in der Regel 2 bis 8, vorzugsweise 2 oder 3, gegenüber Isocyanaten reaktionsfähige Wasserstoffatome auf.

Als Beispiele für derartige Verbindungen seien genannt:

Ethylenglykol, Propylenglykol-(1,2) und -(1,3), Butylenglykol-(1,4) und -(2,3), Pentandiol-(1,5), Hexandiol-(1,6), Octandiol-(1,8), Neopentylglykol, 1,4-Bis-hydroxymethylcyclohexan, 2-Methyl-1,3-propandiol, Glycerin, Trimethylolpropan, Hexantriol-(1,2,6), Trimethylolethan, Pentaerythrit, Chinit, Mannit und Sorbit, Diethylenglykol, Triethylenglykol, Tetraethylenglykol, Polyethylenglykole mit einem Molekulargewicht bis 400, Dipropylenglykol, Polypropylenglykole mit einem Molekulargewicht bis 400, Dibutylenglykol, Polybutylenglykole mit einem Molekulargewicht bis 400, 4,4'-Dihydroxydiphenylpropan, Di-hydroxyethyl-hydrochinon, Ethanolamin, Diethanolamin, Triethanolamin, 3-Aminopropanol, Ethylendiamin, 1,3-Diaminopropan, 1-Mercapto-3-aminopropan, 4-Hydroxy- oder Amino-phthalsäure, Bernsteinsäure, Adipinsäure, Hydrazin, N,N'-Dimethylhydrazin, 4,4'-Diaminophenylmethan, Toluylendiamin, Methylen-bis-chloranilin, Methylen-bis-anthranilsäureester, Diaminobenzoesäureester und die isomeren Chlorphenylendiamine.

Erfindungsgemäß können Hydroxylalkylamine mit endständigen sekundären und/oder primären Aminogruppen bevorzugt eingesetzt werden; insbesondere seien folgende Verbindungen beispielsweise genannt:

N-Methylamino-ethanol, N-Methylamino-propanol, Hydroxyalkylpiperazine wie z. B. Hydroxyethylpiperazin, 2-(Methyl-(3-aminopropyl)-amino)-ethanol, 2-Amino-2-methylpropanol, 4-Hydroxybutyl-3-aminopropylether.

Auch in diesem Fall können Mischungen von verschiedenen Verbindungen mit mindestens 2 gegenüber Isocyanaten reaktionsfähigen Wasserstoffatomen mit einem Molekulargewicht von 32 bis 400 verwendet werden.

Erfindungsgemäß können in Mengen bis zu 50 Gew.-%, bezogen auf den Polyether auf den Polyether, auch Polyhydroxylverbindungen mit eingesetzt werden, in welchen hochmolekulare Polyaddukte bzw. Polykondensate in feindisperser oder gelöster Form enthalten sind. Derartige modifizierte Polyhydroxylverbindungen werden erhalten, wenn man Polyadditionsreaktionen (z. B. Umsetzungen zwischen Polyisocyanaten und aminofunktionellen Verbindungen) bzw. Polykondensationsreaktionen (z. B. zwischen Formaldehyd und Phenolen und/oder Aminen) direkt in situ in den o. g., Hydroxylgruppen aufweisenden Verbindungen ablaufen läßt. Derartige Verfahren sind beispielsweise in den deutschen Auslegeschriften 1 168 075 und 1 260 142, sowie den deutschen Offenlegungsschriften 2 324 134, 2 423 984, 2 512 385, 2 513 815, 2 550 796, 2 550 797, 2 550 833 und 2 550 862 beschrieben. Es ist aber auch möglich, gemäß US-Patent 3 869 413 bzw. deutscher Offenlegungsschrift 2 550 860 eine fertige wäßrige Polymerdispersion mit einer Polyhydroxylverbindung zu vermischen und anschließend aus dem Gemisch das Wasser zu entfernen.

Erfindungsgemäß werden Wasser und/oder leicht flüchtige organische Substanzen als Treibmittel mitverwendet. Als organische Treibmittel kommen z. B. Aceton, Ethylacetat, halogensubstituierte Alkane wie Methylenchlorid, Chloroform, Ethylidenchlorid, Vinylidenchlorid, Monofluortrichlormethan, Chlordifluormethan, Dichlordifluormethan, ferner Butan, Hexan, Heptan oder Diethylether in Frage. Eine Treibwirkung kann auch durch Zusatz von bei Temperaturen über Raumtemperatur unter Abspaltung von Gasen, beispielsweise von Stickstoff, sich zersetzenden Verbindungen, z. B. Azoisobuttersäurenitril, erzielt werden. Weitere Beispiele für Treibmittel sowie Einzelheiten über die Verwendung von Treibmitteln sind im Kunststoff-Handbuch, Band VII, herausgegeben von Vieweg und Höchtlen, Carl-Hanser-Verlag München, 1966, z. B. auf den Seiten 108 und 109, 453 bis 455 und 507 bis 510 beschrieben.

Erfindungsgemäß werden ferner Katalysatoren mitverwendet. Als mitzuverwendende Katalysatoren kommen solche der an sich bekannten Art in Frage, z. B. tertiäre Amine, wie

Triethylamin, Tributylamin, N-Methylmorpholin, N-Ethylmorpholin, N,N,N',N'-Tetramethylethylendiamin, 1,4-Diaza-bicyclo-(2,2,2)-octan, N-Methyl-N'-dimethylaminoethyl-piperazin, N,N-Dimethylbenzylamin, Bis-(N,N-diethylaminoethyl)-adipat, N,N-Diethylbenzylamin, Pentamethyldiethylentriamin, N,N-Dimethylcyclohexylamin, N,N,N',N'-Tetramethyl-1,3-butandiamin, permethyliertes Tetraethylenpentamin, Tetramethylhexamethylendiamin, N,N-Dimethyl-$\beta$-phenylethylamin, 1,2-Dimethylimidazol, 2-Methylimidazol.

Als Katalysatoren kommen auch an sich bekannte Mannichbasen aus sekundären Aminen, wie Dimethylamin, und Aldehyden, vorzugsweise Formaldehyd, oder Ketonen wie Aceton, Methylethylketon oder Cyclohexanon und Phenolen, wie Phenol, Nonylphenol oder Bis-phenol in Frage.

Gegenüber Isocyanatgruppen aktive Wasserstoffatome aufweisende tertiäre Amine als Katalysatoren sind z. B. Triethanolamin, Triisopropanolamin, N-Methyl-diethanolamin, N-Ethyl-diethanolamin, N,N-Dimethyl-ethanolamin, sowie deren Umsetzungsprodukte mit Alkylenoxiden, wie Propylenoxid und/oder Ethylenoxid.

Als Katalysatoren kommen ferner Silaamine mit Kohlenstoff-Silizium-Bindungen, wie sie z. B. in der deutschen Patentschrift 1 229 290 (entsprechend der US-Patentschrift 3 620 984) beschrieben sind, in Frage z. B. 2,2,4-Trimethyl-2-silamorpholin und 1,3-Diethylaminomethyl-tetramethyl-disiloxan.

Als Katalysatoren kommen auch stickstoffhaltige Basen wie Tetraalkylammoniumhydroxide, ferner Alkalihydroxide wie Natriumhydroxid, Alkaliphenolate wie Natriumphenolat oder Alkalialkoholate wie Natriummethylat in Betracht. Auch Hexahydrotriazine können als Katalysatoren eingesetzt werden.

Erfindungsgemäß können auch organische Metallverbindungen, insbesondere organische Zinnverbindungen, als Katalysatoren verwendet werden.

Als organische Zinnverbindungen kommen vorzugsweise Zinn-(II)-salze von Carbonsäuren wie Zinn-(II)-acetat, Zinn-(II)-octoat, Zinn-(II)-ethylhexoat und Zinn-(II)-laurat und die Zinn-(IV)-Verbindungen, z. B. Dibutylzinnoxid, Dibutylzinndichlorid, Dibutylzinndiacetat, Dibutylzinndilaurat, Dibutylzinnmaleat oder Dioctylzinndiacetat in Betracht. Selbstverständlich können alle o. g. Katalysatoren als Gemische eingesetzt werden.

Weitere Vertreter von erfindungsgemäß zu verwendenden Katalysatoren sowie Einzelheiten über die Wirkungsweise der Katalysatoren sind im Kunststoff-Handbuch, Band VII, herausgegeben von Vieweg und Höchtlen, Carl-Hanser-Verlag, München, 1966, z. B. auf den Seiten 96 bis 102, beschrieben.

Die Katalysatoren werden in der Regel in einer Menge zwischen etwa 0,001 und 10 Gew.-%, bezogen auf die Menge an erfindungsgemäß zu verwendenden Polyethern von einem Molekulargewicht von 400 bis 10 000, eingesetzt.

Erfindungsgemäß können gegebenenfalls auch oberflächenaktive Zusatzstoffe, wie Emulgatoren und Schaumstabilisatoren, mitverwendet werden. Als Emulgatoren kommen z. B. die Natriumsalze von Rizinusölsulfonaten oder Salze von Fettsäuren mit Aminen wie ölsaures Diethylamin oder stearinsaures Diethanolamin in Frage. Auch Alkali- oder Ammoniumsalze von Sulfonsäuren wie etwa von Dodecylbenzolsulfonsäure oder Dinaphthylmethandisulfonsäure oder von Fettsäuren wie Ricinolsäure oder von polymeren Fettsäuren können als oberflächenaktive Zusatzstoffe mitverwendet werden.

Als Schaumstabilisatoren kommen vor allem Polyethersiloxane, speziell wasserlösliche Vertreter, in Frage. Diese Verbindungen sind im allgemeinen so aufgebaut, daß ein Copolymerisat aus Ethylenoxid und Propylenoxid mit einem Polydimethylsiloxanrest verbunden ist. Derartige Schaumstabilisatoren sind z. B. in den US-Patentschriften 2 834 748, 2 917 480 und 3 629 308 beschrieben. Es kann aber erfindungsgemäß vorteilhaft sein, in Abwesenheit von Schaumstabilisatoren vom Typ der Polyethersiloxane zu arbeiten.

Erfindungsgemäß können ferner auch Reaktionsverzögerer, z. B. sauer reagierende Stoffe wie Salzsäure oder organische Säurehalogenide, ferner Zellregler der an sich bekannten Art wie Paraffine oder Fettalkohole oder Dimethylpolysiloxane sowie Pigmente oder Farbstoffe und Flammschutzmittel der an sich bekannten Art, z. B. Trischlorethylphosphat, Trikresylphosphat oder Ammoniumphosphat und -polyphosphat, ferner Stabilisatoren gegen Alterungs- und Witterungseinflüsse, Weichmacher und fungistatisch und bakteriostatisch wirkende Substanzen sowie Füllstoffe wie Bariumsulfat, Kieselgur, Ruß oder Schlämmkreide mitverwendet werden.

Weitere Beispiele von gegebenenfalls erfindungsgemäß mitzuverwendenden oberflächenaktiven Zusatzstoffen und Schaumstabilisatoren, Zellreglern, Reaktionsverzögerern, Stabilisatoren, flammhemmenden Substanzen, Weichmachern, Farbstoffen und Füllstoffen, fungistatisch und bakteriostatisch wirksamen Substanzen sowie Einzelheiten über Verwendungs- und Wirkungsweise dieser Zusatzmittel sind im Kunststoff-Handbuch, Band VII, herausgegeben von Vieweg und Höchtlen, Carl-Hanser-Verlag, München 1966, z. B. auf den Seiten 103 bis 113 beschrieben.

Die Reaktionskomponenten werden erfindungsgemäß nach dem an sich bekannten Einstufenverfahren, dem Prepolymerverfahren oder dem Semiprepolymerverfahren, zur Umsetzung gebracht, wobei man sich maschineller Einrichtungen mit mindestens 2 Mischvorrichtungen bedient, z. B. solcher, die in der US-Patentschrift 2 764 565 beschrieben werden. Einzelheiten über Verarbeitungseinrichtungen, die auch erfindungsgemäß in Frage kommen, werden im Kunststoff-Handbuch, Band VII, herausgegeben von Vieweg und Höchtlen, Carl-Hanser-Verlag München, 1966, z. B. auf den Seiten 121 bis 205 beschrieben.

Die Verschäumung wird erfindungsgemäß in Formen durchgeführt. Das Reaktionsgemisch wird mit Hilfe von mindestens zwei Mischvorrichtungen in eine Form eingetragen; dabei wird bei der Verschäumung je Mischvorrichtung eine unterschiedliche Kennzahl (in der Regel zwischen 80 und 130) eingehalten. Als Formmaterial kommt Metall, z. B. Aluminium oder Kunststoff, z. B. Epoxidharz, in Frage. In der Form schäumt das schäumfähige Reaktionsgemisch auf und bildet den Formkörper. Die Formverschäumung kann dabei so durchgeführt werden, daß das Formteil an seiner Oberfläche Zellstruktur aufweist, es kann aber auch so durchgeführt werden, daß das Formteil eine kompakte Haut und einen zelligen Kern aufweist. Erfindungsgemäß kann man in diesem Zusammenhang so vorgehen, daß man in die Form so viel schäumfähiges Reaktionsgemisch einträgt, daß der gebildete Schaumstoff die Form gerade ausfüllt. Man kann aber auch so arbeiten, daß man mehr schäumfähiges Reaktionsgemisch in die Form einträgt, als zur Ausfüllung des Forminneren mit Schaumstoff notwendig ist. Im letztgenannten Fall wird somit unter »overpacking« gearbeitet; eine derartige Verfahrensweise ist z. B. aus den US-Patentschriften 3 178 490 und 3 182 104 bekannt.

Bei der Formverschäumung werden vielfach an sich bekannte »äußere Trennmittel«, wie Siliconöle, mitverwendet. Man kann aber auch sogenannte »innere Trennmittel«, gegebenenfalls im Gemisch mit äußeren Trennmitteln, verwenden, wie sie z. B. aus den deutschen Offenlegungsschriften 2 121 670 und 2 307 589 bekannt geworden sind.

Erfindungsgemäß werden kalthärtende Schaumstoffe (vgl. britische Patentschrift 1 162 517, deutsche Offenlegungsschrift 2 153 086) erhalten.

Die nach der Erfindung erhältlichen Produkte finden z. B. Anwendung als Polstermaterialien.

Neben der Einflußnahme über die Kennzahl auf die Beschaffenheit des Schaumstoffes in den einzelnen Zonen lassen sich durch geeignete Anordnung der Eintragsöffnungen für das Reaktionsgemisch in den Formhohlraum besondere Effekte erzielen.

So ist beispielsweise ein Formteil, bestehend aus einem Polster eines Fahrzeugsitzes mit einer Belastungszone geringerer Härte und Seitenführungszone größerer Härte dadurch gekennzeichnet, daß die Seitenführungszonen in die Belastungszone hineinreichende Ausläufer aufweisen.

Alternativ oder im Kombination ist es auch möglich, daß die Belastungszone in die Seitenführungszonen hineinreichende Ausläufer aufweist.

Unter »Belastungszonen« sind hier jene Zonen eines Polsters zu verstehen, die dauernd und unmittelbar die Körperlast des Benutzers aufnehmen, wie die Sitzzone und die Rücklehnenzone. Die »Seitenführungszonen« sind jene, die lediglich bei seitlichen Bewegungen des Sitzenden bzw. bei auf den Sitzenden einwirkenden Querkräften, z. B. bei Kurvenfahrten eines Automobils, belastet werden.

Nach einer besondere Ausführungsform weisen die Ausläufer die Form sich verjüngender lappenartiger Fortsätze und/oder die Form von Wülsten auf.

Durch diese vorgeschlagenen Maßnahmen steht es dem Konstrukteur frei, für jede Art von Fahrzeugsitzen und für jede besonders häufige Beanspruchungsart optimale Polster zu erstellen.

Beispielsweise wird je nach Größe der lappenartigen Fortsätze bzw. der Wülste sowohl eine Erhöhung der Härte ausschließlich bei hohen Verformungsgraden als auch eine Erhöhung der zum seitlichen Wegknicken der Führungszonen erforderlichen Kraft erreicht.

Die gewünschte Ausbildung der Zonengrenzflächen läßt sich durch entsprechende Anordnung der Eintrittsöffnungen, Wahl der Einfüllzeitpunkte und Wahl der einzutragenden Gemischmengen für die einzelnen Zonen, erzielen.

In der Zeichnung ist das neue Formteil in mehreren Ausführungsbeispielen rein schematisch im Querschnitt dargestellt und nachstehend näher erläutert. Es zeigt

Fig. 1 ein erstes Sitzpolster eines Automobilsitzes als Formteil;
Fig. 2 ein zweites Sitzpolster eines Automobilsitzes als Formteil;
Fig. 3 ein erstes Rückenlehnenpolster eines Automobilsitzes als Formteil und
Fig. 4 ein zweites Rückenlehnenpolster eines Automobilsitzes als Formteil.

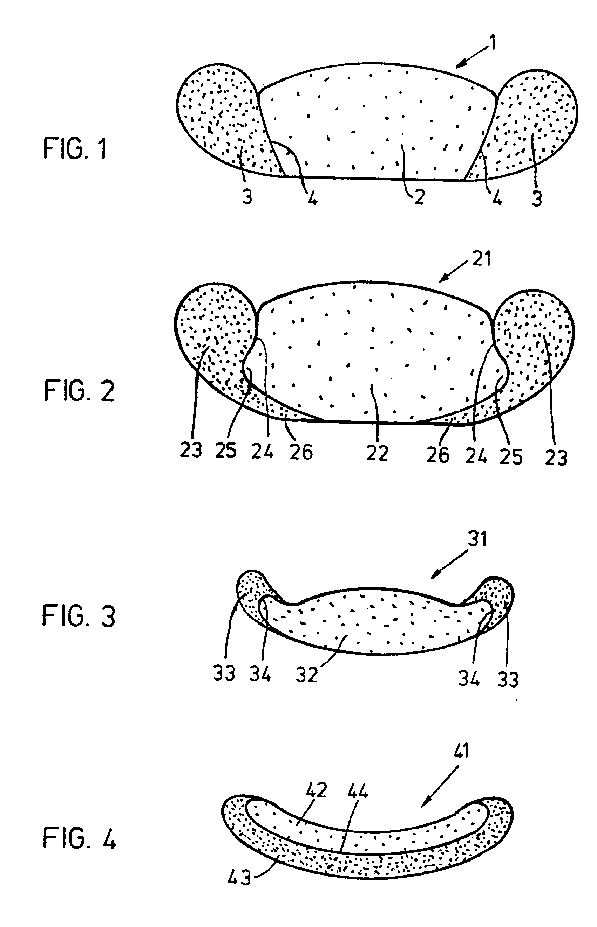

In Fig. 1 besteht das Sitzpolster 1 aus drei Zonen, und zwar aus der als Sitzzone dienenden Belastungszone 2 und aus den seitlichen Führungszonen 3. Die Sitzzone 2 weist gegenüber den Führungszonen 3 einen Schaumstoff geringerer Härte auf. Die zwischen den Zonen 2 und 3 vorhandenen Grenzflächen 4 verlaufen praktisch ebenflächig.

Folgendes Reaktionsgemisch wurde für das Sitzpolster 1, das ein Gesamtgewicht von 1750 g hatte verwendet:

Komponente A

100 Gew.-Teile   Polyether, erhalten durch Addition von Propylenoxid und anschließend Ethylenoxid an Trimethylolpropan mit einer Funktionalität 3 und einem primären OH-Gehalt von ca. 80 Gew.-% bei einer OH-Zahl von ca. 30;
3,1 Gew.-Teile   Wasser;
0,2 Gew.-Teile   Bis-Dimethylaminoethylether;
0,4 Gew.-Teile   handelsüblicher Schaumstabilisator (Stabilisator KS 43 der Bayer AG Leverkusen, BRD);
0,8 Gew.-Teile   Triethylendiamin (33%ig in Dipropylenglykol).

Komponente B

53,3 Gew.-Teile   eines Isocyanates der Kennzahl 100 mit ca. 65 Gew.-% 4,4'-Diphenylmethandiisocyanat und ca. 20 Gew.-% 2,4'-Diphenylmethan-diisocyanat und ca. 15 Gew.-% polymerem MDI bei einem NCO-Gehalt von ca. 32,5%.

Für die Sitzzone 2 wurde eine Kennzahl von 85 (d. h. 104,5 Gew.-Teile Komponente A und 44,5 Gew.-Teile Komponente B) eingestellt; für die Seitenführungszonen 3 hingegen eine Kennzahl von 120 (d. h. auf 104,5 Gew.-Teile Komponente A entfallen 62,8 Gew.-Teile Komponente B). Die Verteilung der Gewichtsmenge an Reaktionsgemisch betrug 2 × 340 g für die Seitenführungszonen 3 und 1250 g für de Sitzzone 2.

Die Entformung erfolgt nach 3,5 bis 4 Minuten, wobei optisch einwandfreie Formteile erhalten wurden, die an den z. B. durch geeigneten Farbstoffzusatz erkennbar gemachten Grenzflächen 4 der Zonen 2 und 3 unterschiedlicher Kennzahlen keine Verschlechterung der Einreiß- oder Weiterreißeigenschaften zeigten.

Die Messung der Eindruckhärte im Sitzbereich — in Anlehnung an DIN 53 576, Methode C: 4mal

7

verformt um 40% der Höhe, beim 4. mal bei 40% ausgewertet (C-Prüfstempel: ∅ 202 mm) — ergab 265 N.

Die Ermittlung von Rohdichte und Stauchhärte des die Sitzzone 2 bzw. die Seitenführungszonen 3 bildenden Schaumstoffes ergab reproduzierbar folgende Werte:

|  | Sitzzone 2 | linke Seitenzone 3 | rechte Seitenzone 3 |
|---|---|---|---|
| Rohdichte nach DIN 53 420 (kg/m$_3$) | 50 | 54 | 55 |
| Stauchhärte nach DIN 53 577 (kPa) | 3,3 | 13,1 | 13,2 |

Bei der guten Übereinstimmung sowohl der Rohdichten als auch der Stauchhärten der linken und rechten Seitenführungszone 3 und wegen des Fehlens einer genormten Meßmethode für Effekte wie Seitenführungsfähigkeit o. ä. wurde auf eine Messung der Eindruckhärten der Seitenteile verzichtet. Sie müssen jedoch aufgrund der ermittelten Stauchhärtewerte vergleichbar eng liegen.

In Fig. 2 besteht das Sitzpolster 21 aus drei Zonen, und zwar aus der als Sitzzone dienenden Belastungszone 22 und den seitlichen Führungszonen 23. Die Sitzzone 22 weist gegenüber den Seitenführungszonen 23 einen Schaumstoff geringerer Härte, d. h. größerer elastischer Verformbarkeit, auf. Durch das Einbringen des Reaktionsgemisches infolge besonderer Anordnung der Eintragsöffnungen, Wahl der Eintragszeitpunkte bzw. Eintragsmengen, bilden sich zwischen den Zonen 22 und 23 definierte Grenzflächen 24 aus, wobei Wülste 25 der Sitzzone 22 sich in die Führungszonen 23 hineinwölben und lappenartige Fortsätze 26 der Führungszonen 23 die Sitzzone 22 untergreifen.

In Fig. 3 besteht das Lehnenpolster 31 aus drei Zonen, und zwar aus der als Anlehnzone dienenden Belastungszone 32 und den Seitenführungszonen 33. Die Anlehnzone 32 weist gegenüber den Seitenführungszonen 33 Schaumstoff geringerer Härte auf, d. h. sie besitzt größere elastische Verformbarkeit. Wülste 34 der Zone 32 reichen in die Seitenführungszonen 33 hinein.

In Fig. 4 ist das Lehnenpolster 41 ebenfalls aus Anlehnzone 42 und Seitenführungszonen 43 aufgebaut. Die Seitenführungszonen 43 gehen jedoch auf der Rückseite der Anlehnzone 42 ineinander über, so daß diese schalenartig umgeben ist. Die Anlehnzone 42 besteht aus Schaumstoff geringerer Härte.

Zur Herstellung eines aus Polyurethanschaumstoff bestehenden Formteils, insbesondere Polster für Fahrzeusitze mit Zonen unterschiedlicher Eindruckhärte geht das neue Verfahren davon aus, daß schäumfähiges Reaktionsgemisch mittels mehrerer Mischköpfe in diesen zugeordnete Zonen des Hohlraumes eines Formwerkzeuges eingeführt wird und das Formteil nach dem Entschäumen entfernt wird.

Es ist dadurch gekennzeichnet, daß als Reaktionsgemisch ein solches verwendet wird, welches

a) als Polyolkomponente mindestens 2 Hydroxylgruppen aufweisende Polyether vom Molekulargewicht 400 bis 10 000, in denen mindestens 10 Gew.-% der vorhandenen Hydroxylgruppen primäre Hydroxylgruppen darstellen, enthält und

b) als Polyisocyanatkomponente ein Gemisch aus Diphenylmethandiisocyanaten und oligomeren Polyphenylpolymethylenpolyisocyanaten, welches 60 bis 90 Gew.-%, vorzugsweise 65 bis 80 Gew.-%, 4,4'-Diphenylmethandiisocyanat und 3 bis 30 Gew.-%, vorzugsweise 10 bis 30 Gew.-%, 2,4'-Diphenylmethandiisocyanat aufweist, enthält, wobei

c) dieses Reaktionsgemisch in mindestens zwei Mischköpfen getrennt voneinander mit unterschiedlicher, den jeweiligen gewünschten Härten entsprechenden Kennzahlen hergestellt wird und

d) von jedem Mischkopf die ihm zugeordnete Zone gespeist wird.

Dadurch wird erreicht, daß das gesamte Polster aus dem gleichen Reaktionsgemisch, das lediglich für jede einzelne Zone unterschiedliche Kennzahlen aufweist, herstellbar ist. Die Herstellung wird hierdurch wesentlich vereinfacht, die Qualität verbessert und die Gesamteigenschaften optimiert.

Nach einer besonderen Durchführungsform wird das Reaktiongemisch derart in die verschiedenen Zonen eingeführt, daß die durch verschiedene Öffnungen eingebrachten Ströme in gewünschter Weise gegen- und ineinanderfließen.

Dadurch bilden sich reproduzierbare konturierte Grenzflächen nach Art einer Verzahnung. Dies ist besonders wichtig in Bezug auf die Haltbarkeit der Polster, dem neben der zwar sehr guten Haftung des Schaumstoffs der verschiedenen Zonen aneinander, bietet diese Verzahnung auch noch, wie bereits weiter oben erwähnt, besondere Möglichkeiten der Einflußnahme auf die Gesamteigenschaften des Polsters, die durch unterschiedliche Härten der einzelnen Zonen allein nicht erzielbar wären. Der besondere Vorteil dieser Verfahrensweise ist der verhärtungsfreie Übergang des Schaumstoffes an den Grenzflächen zwischen den benachbarten Zonen.

Zur Fertigung eines Sitzpolsters für einen Fahrzeugsitz wird man beipielsweise die Einlaßöffnungen für das Reaktionsgemisch so anordnen, daß sich im Kniekehlenbereich die Sitzzone mit Schaumstoff geringerer Härte stark ausprägt, während der Gesäßbereich des Sitzkissens am hinteren Ende von den seitlichen Führungszonen nahezu eingerahmt wird.

Ähnliche Effekte in Bezug auf die Steifigkeit lassen sich bei Rückenlehnen für Fahrzeugsitze erzielen, um eine der Wirbelsäule des menschlichen Körpers angepaßte Abstützung zu ermöglichen.

**Patentansprüche**

1. Formteil, insbesondere Polster für Fahrzeugsitze, bestehend aus einem Polyurethanschaumstoffteil (1; 21; 31; 41) mit Zonen (2, 3; 22, 23; 32, 33; 42, 43) unterschiedlichen Härte, dadurch gekennzeichnet, daß dieses Polyurethanschaumstoffteil (1; 21; 31; 41) ein Reaktionsprodukt darstellt,

a) aus einer Polyolkomponente mit mindestens zwei Hydroxylgruppen aufweisenden Polyethern vom Molekulargewicht 400 bis 10 000, in denen mindestens 10 Gew.-% der vorhandenen Hydroxylgruppen primäre Hydroxylgruppen darstellen, und

b) aus einer Polyisocyanatkomponente, enthaltend ein Gemisch aus Diphenylmethandiisocyanaten und oligomeren Polyphenylpolymethylenpolyisocyanaten, welches 60 bis 90 Gew.-%, vorzugsweise 65 bis 80 Gew.-%, 4,4'-Diphenylmethandiisocyanat und 3 bis 30 Gew.-%, vorzugsweise 10 bis 30 Gew.-%, 2,4'-Diphenylmethandiisocyanat aufweist, wobei

c) die diesem Reaktionsprodukt zugehörige Reaktionsmischung für die einzelnen Zonen (2, 3; 22, 23; 32, 33; 32, 43) unterschiedliche, für die gewünschte Härte charakteristische Kennzahlen aufweist, und

d) die Übergänge (4; 24; 34; 44) zwischen den einzelnen Zonen (2, 3; 22, 23; 32, 33; 42, 43) verhärtungsfrei sind.

2. Formteil nach Anspruch 1, bestehend aus einem Polster (21) eines Fahrzeugsitzes mit einer Belastungszone (22) geringerer Härte und Seitenführungszonen (23) größerer Härte dadurch gekennzeichnet, daß die Seitenführungszonen (23) in die Belastungszone (22) hineinreichende Ausläufer (26) aufweist.

3. Formteil nach Anspruch 1, bestehend aus einem Polster (21; 31) eines Fahrzeugsitzes mit einer Belastungszone (22; 32) geringerer Härte und Seitenführungszonen (23; 33) größerer Härte, dadurch gekennzeichnet, daß die Belastungszone (22; 32) in die Seitenführungszonen (23; 33) hineinreichende Ausläufer (25; 35) aufweist.

4. Formteil nach den Ansprüchen 2 und/oder 3, dadurch gekennzeichnet, daß die Ausläufer (26) die Form sich verjüngender Lappen haben.

5. Formteil nach den Ansprüchen 2 und/oder 3, dadurch gekennzeichnet, daß die Ausläufer (25; 35) die Form von Wülsten haben.

6. Verfahren zur Herstellung eines aus Polyurethanschaumstoff bestehenden Formteiles, insbesondere Polster für Fahrzeugsitze, mit Zonen unterschiedlicher Härte, wobei schäumfähiges Reaktionsgemisch mittels mehrerer Mischköpfe in den einzelnen Mischköpfen zugeordnete Zonen des Hohlraumes eines Formwerkzeuges eingeführt wird und das Formteil nach dem Aufschäumen entformt wird, dadurch gekennzeichnet, daß als Reaktionsgemisch ein solches verwendet wird, welches

a) als Polyolkomponente mindestens 2 Hydroxylgruppen aufweisende Polyether vom Molekulargewicht 400 bis 10 000, in denen mindestens 10 Gew.-% der vorhandenen Hydroxylgruppen primäre Hydroxylgruppen darstellen, enthält, und

b) als Polyisocyanatkomponente ein Gemisch aus Diphenylmethandiisocyanaten und oligomeren Polyphenylpolymethylenpolyisocyanaten, welches 60 bis 90 Gew.-%, vorzugsweise 65 bis 80 Gew.-%, 4,4'-Diphenylmethandiisocyanat und 3 bis 30 Gew.-%, vorzugsweise 10 bis 30 Gew.-%, 2,4'-Diphenylmethandiisocyanat aufweist, enthält, wobei

c) dieses Reaktionsgemisch in mindestens zwei Mischköpfen getrennt voneinander mit unterschiedlichen, den jeweiligen gewünschten Eindruckhärten entsprechenden Kennzahlen hergestellt wird und

d) von jedem Mischkopf die ihm zugeordnete Zone gespeist wird.

7. Verfahren nach Anspruch 6, dadurch gekennzeichnet, daß das Reaktionsgemisch derart in die verschiedenen Zonen eingeführt wird, daß die durch verschiedene Öffnungen eingebrachten Gemischströme in gewünschter Weise gegen- und ineinanderfließen.

**Claims**

1. A moulding, more particularly a cushion for vehicle seats, consisting of a polyurethane foam moulding (1; 21; 31; 41) having zones (2, 3; 22, 23; 32, 33; 42, 43) of different hardness, characterised in that this polyurethane foam moulding (1; 21; 31; 41) is a reaction product

- a) of a polyol component comprising polyethers containing at least two hydroxyl groups and having a molecular weight of 400 to 10,000 in which at least 10% by weight of the hydroxyl groups present are primary hydroxyl groups and
- b) of a polyisocyanate component containing a mixture of diphenylmethane diisocyanates and oligomeric polyphenyl polymethylene polyisocyanates which contains 60 to 90% by weight, preferably 65 to 80% by weight, of 4,4'-diphenylmethane diisocyanate and 3 to 30% by weight, preferably 10 to 30% by weight, of 2,4'-diphenylmethane diisocyanate,
- c) the reaction mixture associated with this reaction product having different indices characteristic of the required hardness for the individual zones (2, 3; 22, 23; 32, 33; 42, 43), and,
- d) the transitions (4; 24; 34; 44) between the individual zones (2, 3; 22, 23; 32, 33; 42, 43) are free from any hardening.

2. A moulding according to Claim 1, consisting of a cushion (21) for a vehicle seat comprising a stress zone (22) of relatively low hardness and lateral support zones (23) of relatively great hardness, characterised in that the lateral support zones (23) have branches (26) extending into the stress zone (22).

3. A moulding according to Claim 1, consisting of a cushion (21; 31) for a vehicle seat comprising a stress zone (22; 32) of relatively low hardness and lateral support zones (23; 33) of relatively great hardness, characterised in that the stress zone (22; 32) has branches (25; 35) extending into the lateral support zones (23; 33).

4. A moulding according to Claims 2 and/or 3, characterised in that the branches (26) are in the form of tapering lobes.

5. A moulding according to Claims 2 and/or 3, characterised in that the branches (25; 35) are in the form of bulges.

6. A process for the production of a moulding consisting of polyurethane foam, particularly cushions for vehicle seats, having zones of different hardness, wherein foamable reaction mixture is introduced by means of several mixing heads into zones, associated with the individual mixing, of the cavity of a mould and the moulding is removed from the mould after foaming, characterised in that the reaction mixture used is one which

- a) contains as polyol component polyethers containing at least 2 hydroxyl groups and having a molecular weight in the range of 400 to 10,000, in which at least 10% by weight of the hydroxyl groups present are primary hydroxyl groups, and
- b) contains as polyisocyanate component a mixture of diphenylmethane diisocyanates and oligomeric polyphenyl polymethylene polyisocyanates which contains 60 to 90% by weight, preferably 65 to 80% by weight, of 4,4'-diphenylmethane diisocyanate and 3 to 30% by weight, preferably 10 to 30% by weight, of 2,4'-diphenylmethane diisocyanate,
- c) this reaction mixture being produced separately in at least 2 mixing heads with different indices corresponding to the the particular indentation hardnesses required and
- d) each mixing head feeding the zone associated therewith.

7. A process according to Claim 6, characterised in that the reaction mixture is introduced into the various zones in such a way that the streams of mixture introduced through various openings flow against and into one another in the required manner.

**Revendications**

1. Pièce façonnée ou moulée, en particulier rembourrage pour sièges de véhicules, consistant en une mousse de polyuréthanne (1; 21; 31; 41) comportant des zones (2, 3; 22, 23; 32, 33; 42, 43) de dureté différente, pièce caractérisée en ce que cette mousse de polyuréthanne constitue un produit de la réaction:

- a) d'un composant polyol comportant des polyéthers d'un poids moléculaire de 400 à 10 000, présentant au moins deux groupes hydroxyles et dans lesquels 10% au moins des groupes hydroxyles présents resprésentent des groupes hydroxyles primaires, et
- b) d'un composant polyisocyanate, contenant un mélange de diisocyanates de diphénylméthane et de polyisocyanates de polyphénylpolyméthylènes oligomères, mélange présentant 60 à 90% en poids, de préférence 65 à 80% en poids, de 4,4'-diisocyanate de diphénylméthane et 3 à 30% en poids, de préférence 10 à 30% en poids, de 2,4'-diisocyanate de diphénylméthane,
- c) le mélange réactionnel correspondant à ce produit de réaction présentant pour les diverses zones (2, 3, 22, 23; 32, 33; 42, 43) des indices ou nombres caractéristiques différents correspondant à la dureté voulue, et

d) les transitions (4; 24; 34; 44) entre les zones individuelles (2, 3; 22, 23; 32, 33; 42, 43) ne contenant pas de zone de durcissement.

2. Pièce moulée ou façonnée selon la revendication 1, consistant en un rembourrage (21) d'un siège de véhicule présentant une zone de charge (22) de plus faible dureté et des zones (23) de guidage latéral de plus grande dureté, pièce caractérisée en ce que les zones de guidage latéral (23) présentent des saillies (26) pénétrant dans la zone de charge (22).

3. Pièce moulée selon la revendication 1, consistant en un rembourrage (21; 31) d'un siège de véhicule, comportant une zone de charge (22; 32) de plus faible dureté et des zones latérales de guidage (23; 33) de plus grande dureté, pièce caractérisée en ce que la zone de charge (22; 32) présente des saillies (25; 35) pénétrant dans les zones latérales de guidage (23; 33).

4. Pièce moulée selon les revendications 2 et/ou 3, caractérisée en ce que les saillies (26) ont la forme de languettes qui se rétrécissent.

5. Pièce moulée selon les revendications 2 et/ou 3, caractérisée en ce que les saillies (25; 35) ont la forme de bourrelets.

6. Procédé de fabrication d'une pièce moulée consistant en de la mousse de polyuréthanne, notamment du rembourrage pour sièges de véhicules, comportant des zones de dureté différente, procédé selon lequel on introduit à l'aide de plusieurs têtes mélangeuses du mélange réactionnel, capable de mousser, dans les zones, correspondant aux diverses têtes mélangeuses, de l'espace creux d'un outil de formage ou moule et, après moussage, on retire la pièce moulée de son moule, procédé caractérisé en ce que l'on utilise comme mélange réactionnel un mélange qui:

a) contient comme composant polyol des polyéthers d'un poids moléculaire compris entre 400 et 10 000, présentant au moins deux groupes hydroxyles, dans lesquels au moins 10% en poids des groupes hydroxyles présents représentent des groupes hydroxyles primaires, et

b) contient comme composant polyisocyanate un mélange de diisocyanates de diphénylméthane et de polyisocyanates de polyphénylpolyméthylènes oligomères, lequel présente 60 à 90% en poids, de préférence 65 à 80% en poids, de 4,4'-diisocyanate de diphénylméthane et 3 à 30% en poids, de préférence 10 à 30% en poids, de 2,4'-diisocyanate de diphénylméthane,

c) ce mélange réactionnel étant préparé dans au moins deux têtes mélangeuses séparées l'une de l'autre, en ayant des indices caractéristiques différents correspondant aux duretés à la compression voulue dans chaque cas, et

d) le mélange étant introduit par chaque tête mélangeuse dans la zone du moule qui lui correspond.

7. Procédé selon la revendication 6, caractérisé en ce qu'on introduit le mélange réactionnel dans les diverses zones de mainère que les courants du mélange introduits par les divers orifices circulent de façon voulue à contre-courant et en se pénétrant mutuellement.

FIG. 1

FIG. 2

FIG. 3

FIG. 4